# EUROPEAN PATENT APPLICATION

(11) **EP 4 465 103 A1**
(43) Date of publication of application: **20.11.2024**
(21) Application number: 24176443.0
(22) Date of filing: 16.05.2024
(51) Int. Cl.: G02B 6/44

(54) **OPTICAL FIBER CABLE WITH METAL ARMORING**

(30) Priority: 17.05.2023 IN 202311034483
(71) Applicant: Sterlite Technologies Limited, Gurugram, Haryana 122102 (IN)
(72) Inventor: SINGH, Kangabam Tenzing, 122102 Haryana (IN)
(74) Representative: Sach, Greg Robert

(57) **Abstract**

The present disclosure relates to an optical fiber cable (100) comprising a plurality of optical fibers (102a-102n), an armor layer (104) surrounding the plurality of optical fibers (102a-102n) such that an empty space (114) is formed between the armor layer (104) and the plurality of optical fibers (102a-102n) and a sheath (110) surrounding the armor layer (104). In particular, the empty space (114) is free from any material and has a stiffness greater than 60 Newton per meter (N/m).

## Description

### TECHNICAL FIELD

Embodiments of the present disclosure relate to the field of telecommunication fiber, and more particularly, relates to an optical fiber cable with metal armoring.
This application claims the benefit of Indian Application No. "202311034483" titled "OPTICAL FIBER CABLE WITH METALARMORING" filed by the applicant on May 17, 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Optical distribution cable is mainly used between optical wiring point and user access point, and this requires optical distribution cable core number is relatively large, optical cable is straight Diameter is relatively small, and for the laying between corridor, needs to bend optical cable, it is ensured that the buckle resistance of optical cable can be strong. It passes the optical distribution cable of system is followed successively by fibre ribbon, Loose tube, metal reinforcement and armor, sheath, this fibre ribbon light from inside to outside The outer diameter and weight of cable are all larger, and the bending of metal armor layers and stretch-resistance are to be improved.

Specifically, there are various optical fiber cables are known in the prior arts which are provided with metal armours. The metallic armour layer in conventional optical fiber cables is supported or wrapped around a sheath or an inner tube, which encloses the optical fibers. Further, in conventional fiber cable, putting a conventional metal armour tape directly over the fibers may collapse the circularity of the optical fiber cable, which causes increased attenuation and macro bending of the optical fiber cable. Further, having an inner sheath/tube below the metallic armour may increase the diameter and weight of the cable.

Reference CN209640553U discloses use of spiral armour around a ribbon stack that has a TPE based hard pressed bale layer over stack to support the armour.

Another reference CN210051943U discloses use of spiral armour around the cable core with optical fiber ribbons having a PVC/TPU based protective inner layer around the ribbons and then a reinforcing layer of aramids to support the armour.

Yet Another reference CN203385911U discloses use of metal braid applied around an inner sheath enclosing optical fibers.

Yet Another reference CN217425788U discloses use of non-metallic (Aramid) braiding the core of optical fiber cable, including peelable microtubes with ribbons.

Existing optical fiber cables with metal armours face challenges where directly placing the metal armour tape over fibers may cause stress, leading to increased attenuation and macro bending. Additionally, incorporating an inner sheath or tube raises diameter and weight issues. Prior art references attempt solutions, but drawbacks persist.

Conventional optical fiber cables employing metal armours struggle with circularity distortion, increased attenuation, and added weight due to inner sheaths or tubes. Previous solutions, such as those disclosed in CN209640553U, CN210051943U, CN203385911U, and CN217425788U, aim to address these issues but still pose shortcomings of having an additional protective layer below armour.

The optical communication industry has long sought an effective solution for the optimal dimensions and weight of armoured optical fiber cables. Accordingly, to overcome the disadvantages of the prior art, there is an urgent need for a technical solution that overcomes the above-stated limitations in the prior arts by introducing a configuration that mitigates the drawbacks associated with conventional designs. Thus, the present disclosure proposes an optical fiber cable with an optimal placement of armor layer.

### SUMMARY OF THE DISCLOSURE

Embodiments of the present disclosure relates to optical fiber cable comprising a plurality of optical fibers, an armor layer that surrounds the plurality of optical fibers such that an empty space is formed between the armor layer and the plurality of optical fibers and a sheath that surrounds the armor layer. In particular, the empty space is free from any material having stiffness greater than 60 Newton per meter (N/m).

According to the first aspect of the present disclosure, the armor layer is made up of steel and electrolytic chrome-coated steel (ECCS). In particular, the armor layer is in the form of a spring shaped metal layer and braided layer that is formed by a plurality of metal wires.

According to the second aspect of the present disclosure, the plurality of optical fibers is in the form of a plurality of ribbons. In particular, each ribbon of the plurality of ribbons (112a-112n) is an intermittently bonded ribbon (IBR).

According to the third aspect of the present disclosure, the optical fiber cable further comprises one or more deformable layers such that the empty space is partially filled with the one or more deformable layers. Further, each deformable layer of the one of more deformable layers has a stiffness that is less than or equal to 60 N/m.

According to the fourth aspect of the present disclosure, each deformable layer of the one or more deformable layers is anyone of, a water blocking tape, a water swellable yarn, an aramid yarn, a mica tape, a glass roving yarn.

According to the fifth aspect of the present disclosure, each deformable layer of the one or more deformable layers is deformable by a force of less than 0.5 N.

According to the sixth aspect of the present disclosure, the armor layer has an armor filling coefficient that is greater than 0.3.

In accordance with an embodiment of the present disclosure, , optical fiber cable further comprising one or more layers disposed between the armor layer and the sheath. Further, each layer of the one or more layers (108a-108n) is one of, a water blocking tape, a water swellable yarn, an aramid yarn, a mica tape, a glass roving yarn.

The foregoing objectives of the present disclosure are attained by providing an optical fiber cable with metal armoring.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a cross sectional view of an optical fiber cable in accordance with an embodiment of the present disclosure;
Fig. 1B is a pictorial snapshot illustrating a side view of the optical fiber cable in accordance with an embodiment of the present disclosure;
Fig. 2A is a pictorial snapshot illustrating a cross sectional view of another optical fiber cable in accordance with another embodiment of the present disclosure;
Fig.2B is a pictorial snapshot illustrating a perspective view of the optical fiber cable in accordance with another embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term "optical fiber" as used herein refers to a light guide that provides high-speed data transmission. The optical fiber includes one or more glass core regions and a glass cladding region. The light moving through the glass core regions of the optical fiber relies upon the principle of total internal reflection, where the glass core regions have a higher refractive index (n1) than the refractive index (n2) of the glass cladding region of the optical fiber.

Term "optical fiber cable" as used herein refers to a cable that encloses a plurality of optical fibers.

Term "intermittently bonded ribbon (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

Term "armor filling coefficient" as used herein refers to a ratio of cross-sectional area of the plurality of optical fibers to cross-sectional area of an armor layer with respect to an outer surface of the armor layer. In other words, the armor filling coefficient refers to a packing density of optical fibers inside the armor layer.

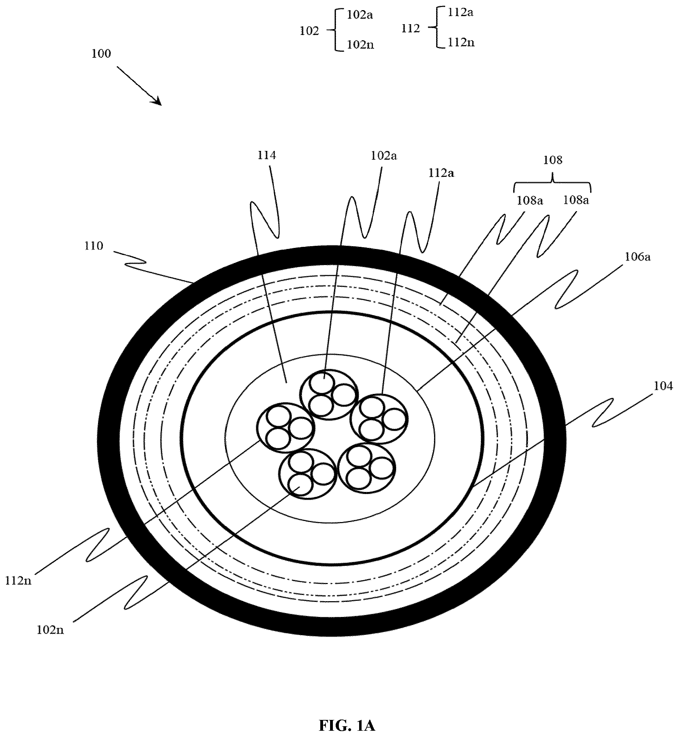

Fig. 1A is a pictorial snapshot illustrating a cross sectional view of an optical fiber cable in accordance with an embodiment of the present disclosure. The optical fiber cable 100 may be installed through various aerial overhead poles or laid inside various ducts that may be used in different applications. In particular, the optical fiber cable 100 may have a plurality of optical fibers 102a -102n (hereinafter collectively referred to and designated as "the optical fibers 102"), an armor layer 104, one or more deformable layers 106a-106n (hereinafter collectively referred to and designated as "the deformable layers 106"), one or more layers 108a-108n (hereinafter collectively referred to and designated as "the layers 108"), and a sheath 110.

In accordance with an embodiment of the present disclosure, the optical fibers 102 may be disposed within the optical fiber cable 100. The optical fibers 102 may be in the form of one of, but not limited to, loose fibers, stacks of ribbons, bundles of ribbons, and intermittently bonded ribbon (IBR) bundles.

In accordance with an embodiment of the present disclosure, the optical fibers 102 may be in the form of a plurality of ribbons 112a-112n (hereinafter collectively referred to and designated as "the ribbons 112"). In particular, each ribbon of the ribbons 112 may be an intermittently bonded ribbon (IBR). Moreover, the IBR may have a set of optical fibers of the optical fibers 102 such that the set of optical fibers are disposed parallel to each other. Further, the set of optical fibers of the optical fibers 102 may be intermittently bonded by a plurality of bonded portions that may be separated by a plurality of unbonded portions.

Each optical fiber of the optical fibers 102 may be one of, a single mode fiber, a multimode fiber, a single core fiber, and a multi-core fiber.

In accordance with an embodiment of the present disclosure, the armor layer 104 may be adapted to surround the optical fibers 102 such that an empty space 114 is formed between the armor layer 104 and the optical fibers 102. Particularly, the empty space 114 may be free from any material having stiffness greater than 60 Newton per meter (N/m).

Further, the armor layer 104 may be made up of a material including, but not limited to, steel and electrolytic chrome-coated steel (ECCS).

In accordance with an embodiment of the present disclosure, the armor layer 104 may have an armor filling coefficient that may be greater than 0.3. The armor filling coefficient being less than 0.3, may increase a diameter of the armor layer 104, which may eventually increase a diameter of the optical fiber cable 100.

In accordance with an embodiment of the present disclosure, the empty space 114 may be at least partially filled with the deformable layers 106. In particular, each layer of the deformable layers 106 may have a stiffness that may be less than or equal to 60 N/m. Advantageously, the optical fiber cable 100 avoids usage of any hard material to be disposed in between the optical fibers 102 and the armor layer 104. Moreover, the optical fiber cable 100 advantageously avoids usage of any layer having a stiffness greater than 60 N/m, as the material with stiffness greater than 60 N/m may create more empty space in a core of the optical fiber cable 100, which may increase the diameter of the optical fiber cable 100.

In accordance with an embodiment of the present disclosure, one or more layers of the deformable layers 106 may be one of, but not limited to a water blocking tape, a water swellable yarn, an aramid yarn, a mica tape, and a glass roving yarn.

In particular, each layer of the deformable layers 106 may be deformable by a force *(i.e.,* deformable force) of less than 0.5 N. The deformable force being greater than 0.5 N may categorize each layer of the deformable layers 106 in a hard material category.

In accordance with an embodiment of the present disclosure, the sheath 110 may surround the armor layer 104. In particular, material of the sheath 110 may be but not limited to, polyethylene, low-smoke zero-halogen (LSZH), polyvinyl chloride (PVC), thermoplastic polyurethane (TPU), and the like.

In accordance with an embodiment of the present disclosure, the layers 108 may be disposed between the armor layer 104 and the sheath 110. Particularly, each layer of the layers 108 may be one of, but not limited to, a water blocking tape, a water swellable yarn, an aramid yarn, a mica tape, and a glass roving yarn.

Aspects of the present disclosure are intended to include and/or otherwise cover any type of the layers 108, any type of the deformable layers 106, optical fibers 102 in any form, any type of known and later developed material for the armor layer 104 without deviating from the scope of the present disclosure.

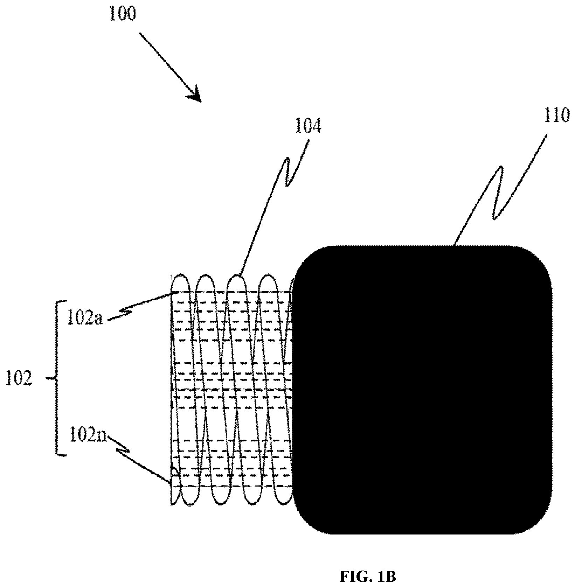

Fig. 1B is a pictorial snapshot illustrating a side view of the optical fiber cable in accordance with an embodiment of the present disclosure. The optical fiber cable 100 may have the optical fibers 102, the armor layer 104, and the sheath 110. The armor layer 104 may be in the form of a spring and/or a spiral shaped metal layer. Particularly, the spiral shaped metal layer may enable maintaining a circular shape without need of any inner tube or sheath layer underneath the armor layer 104. Thus, the spiral shaped metal layer may eliminate the inner tube or the sheath, which may advantageously reduce the diameter of the optical fiber cable 100.

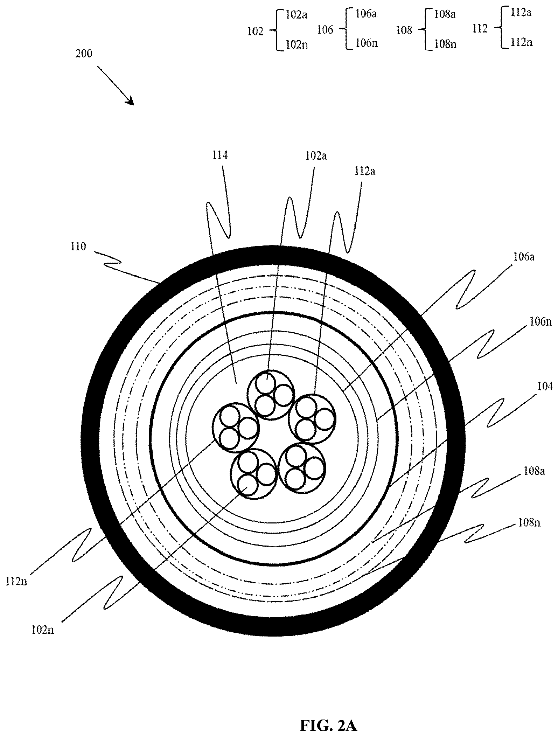

Fig. 2A is a pictorial snapshot illustrating a cross sectional view of another optical fiber cable in accordance with another embodiment of the present disclosure. The optical fiber cable 200 may be substantially similar to the optical fiber cable 100, in terms of structural and functional aspects and the like elements of the optical fiber cable 100 are referenced with numerals in the optical fiber cable 200. The optical fiber cable 200 is provided with the deformable layers 106 such that one or more deformable layers of the deformable layers 106 may be, but not limited to, a mica tape, a water blocking tape, a fire retardant tape, water swellable yarns, and the like. Further, in the optical fiber cable 200, the armor layer 104 may be the braided layer that may be formed by a plurality of metal wires.

Further, the layers 108 may be disposed between the armor layer 104 and the sheath 110 of optical fiber cable 200. And, each layer of the layers 108 may be one of, but not limited to, a water blocking tape, a water swellable yarn, an aramid yarn, a mica tape, and a glass roving yarn.

Aspects of the present disclosure are intended to include and/or otherwise cover any type of the layers 108 and any type of the deformable layers 106 that has one or more properties similar to one of, a mica tape, a water blocking tape, a fire retardant tape, water swellable yarns, without deviating from the scope of the present disclosure.

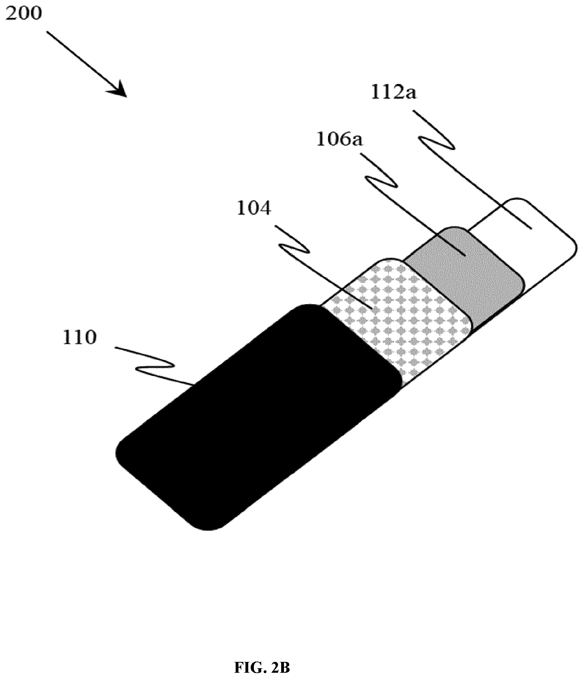

Fig.2B is a pictorial snapshot illustrating a perspective view of the optical fiber cable in accordance with another embodiment of the present disclosure. Fig. 2B shows only one deformable layer 106a *(i.e.,* the mica tape) of the deformable layers 106 and only one ribbon 112a of the ribbons 112. In particular, the ribbon 112a may be surrounded by the deformable layer 106a. And, the deformable layer 106a may be surrounded by the armor layer 104 (*i.e*., the braided layer formed by a plurality of metal wires). Moreover, the armor layer 104 may be surrounded by the sheath 110. Further, the armor layer 104 (*i.e*., the braided layer formed by a plurality of metal wires) may enable maintaining a circular shape without need of any inner tube or sheath layer underneath the armor layer 104.

In accordance with an embodiment of the present disclosure, the optical fiber cable 100 comprising a plurality of optical fibers 102a-102n, an armor layer 104 that surrounds the plurality of optical fibers 102a-102n such that an empty space 114 is formed between the armor layer 104 and the plurality of optical fibers 102a-102n, where the empty space 114 has regions of free space and a sheath 110 that surrounds the armor layer 104.

In accordance with an embodiment of the present disclosure, the optical fiber cable 100 further comprising one or more deformable layers 106a-106n such that the empty space 114 is partially filled with the one or more deformable layers 106a-106n where each deformable layer of the one of more deformable layers 106a-106n has a stiffness that is less than or equal to 60 N/m. The empty space 114 is free from any material having stiffness greater than 60 Newton per meter (N/m).

In accordance with an embodiment of the present disclosure, the optical fiber cable 100 further comprising at least one of a water blocking tape, a water swellable yarn, an aramid yarn, a mica tape, and a glass roving yarn, in the empty space 114.

The disclosed optical fiber cable introduces an armour layer surrounding the optical fibers, creating an empty space free from materials with stiffness greater than 60 N/m. This configuration prevents excessive weight and dimensions associated with conventional designs, without deteriorating the optical performance. In addition to resolving dimensions and weight issues, the optical fiber cable design with an empty space between the armour layer and optical fibers offers improved flexibility and reduced attenuation. The absence of stiff materials enhances overall cable performance.

The arrangement of a metal armour layer surrounding optical fibers, ensuring the creation of an empty space devoid of materials with stiffness greater than 60 N/m. This strategic configuration reduces attenuation, and addresses size and weight concerns. Further, the strategic selection and placement of the armour layer, creating an empty space, synergistically addresses the long-standing issues of signal loss and excess weight and diameter. By excluding materials with stiffness greater than 60 N/m, the optical fiber cable achieves optimal performance, ensuring flexibility and attenuating signal loss.

The optical fiber cable design demonstrates enhanced signal transmission and reducing weight and diameter. The configuration accommodates various applications, ensuring reliable and efficient communication compact armored cable to work in diverse environments.

The disclosed optical fiber covers a wide range of optical fiber cables having metallic armoring, providing a versatile and comprehensive solution to address these challenges in the optical communication industry.

Advantageously, the optical fiber cables 100 and 200 may have a reduced diameter. Since, the inner sheath or tube that may be disposed underneath the armor layer 106 is eliminated, therefore, the diameter of the optical fiber cables 100 and 200 is reduced. Further, the optical fiber cables 100 and 200 may require a lesser number of layers, which again reduces the diameter of the optical fiber cables 100 and 200. The empty space 114 may be free from any solid or hard material, which may reduce weight of the optical fiber cables 100 and 200.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
a plurality of optical fibers (102a-102n);
an armor layer (104) that surrounds the plurality of optical fibers (102a-102n) such that an empty space (114) is formed between the armor layer (104) and the plurality of optical fibers (102a-102n), wherein the empty space (114) is free from any material having stiffness greater than 60 Newton per meter (N/m); and
a sheath (110) that surrounds the armor layer (104).

2. The optical fiber cable (100) of claim 1, wherein the armor layer (104) is made up of one of, steel and electrolytic chrome-coated steel (ECCS).

3. The optical fiber cable (100) of claim 1, wherein the armor layer (104) is in form of one of, a spring shaped metal layer and braided layer that is formed by a plurality of metal wires.

4. The optical fiber cable (100) of claim 1, wherein the plurality of optical fibers (102a-102n) is in form of a plurality of ribbons (112a-112n).

5. The optical fiber cable (100) of claim 4, wherein each ribbon of the plurality of ribbons (112a-112n) is an intermittently bonded ribbon (IBR).

6. The optical fiber cable (100) of claim 1, wherein the optical fiber cable (100) further comprising one or more deformable layers (106a-106n) such that the empty space (114) is partially filled with the one or more deformable layers (106a-106n) and wherein each deformable layer of the one of more deformable layers (106a-106n) has a stiffness that is less than or equal to 60 N/m.

7. The optical fiber cable (100) of claim 6, wherein each deformable layer of the one or more deformable layers (106a-106n) is one of, a water blocking tape, a water swellable yarn, an aramid yarn, a mica tape, a glass roving yarn.

8. The optical fiber cable (100) of claim 6, wherein each deformable layer of the one or more deformable layers (106a-106n) is deformable by a force of less than 0.5 N.

9. The optical fiber cable (100) of claim 1, wherein the armor layer (104) has an armor filling coefficient that is greater than 0.3.

10. The optical fiber cable (100) of claim 1, wherein the optical fiber cable (100) further comprising one or more layers (108a-108n) disposed between the armor layer (104) and the sheath (110).

11. The optical fiber cable (100) of claim 10, wherein each layer of the one or more layers (108a-108n) is one of, a water blocking tape, a water swellable yarn, an aramid yarn, a mica tape, a glass roving yarn.

12. An optical fiber cable (100) **characterized in that**:
a plurality of optical fibers (102a-102n);
an armor layer (104) that surrounds the plurality of optical fibers (102a-102n) such that an empty space (114) is formed between the armor layer (104) and the plurality of optical fibers (102a-102n), where the empty space (114) has regions of free space; and
a sheath (110) that surrounds the armor layer (104).

13. The optical fiber cable (100) of claim 12, wherein the optical fiber cable (100) further comprising one or more deformable layers (106a-106n) such that the empty space (114) is partially filled with the one or more deformable layers (106a-106n) where each deformable layer of the one of more deformable layers (106a-106n) has a stiffness that is less than or equal to 60 N/m.

14. The optical fiber cable (100) of claim 12, wherein the empty space (114) is free from any material having stiffness greater than 60 Newton per meter (N/m)

15. The optical fiber cable (100) of claim 6 12, wherein the optical fiber cable (100) further comprising at least one of a water blocking tape, a water swellable yarn, an aramid yarn, a mica tape, and a glass roving yarn, in the empty space (114).
